# FASCICULE DE BREVET EUROPEEN

(11) **EP 2 791 571 B1**
(45) Date de publication et mention de la délivrance du brevet: **16.09.2015**
(21) Numéro de dépôt: 12810365.2
(22) Date de dépôt: 07.12.2012
(51) Int. Cl.: F17C 5/00, F02K 9/50

(54) **DISPOSITIF ET PROCEDE DE PRESSURISATION**
DRUCKBEAUFSCHLAGUNGSVORRICHTUNG UND -VERFAHREN
PRESSURIZING DEVICE AND METHOD

(30) Priorité: 14.12.2011 FR 1161612
(43) Date de publication de la demande: 22.10.2014
(73) Titulaire: SNECMA, 75015 Paris (FR)
(72) Inventeur: HAYOUN, David, F-75116 Paris (FR); DANGUY, François, F-27510 Tourny (FR); SANNINO, Jean Michel, F-27950 Saint-marcel (FR); NOIR, Pascal, Marcel, Jean, F-91240 Saint Michel Sur Orge (FR)
(74) Mandataire: Calvo de Nó, Rodrigo
(86) Numéro de dépôt international: PCT/FR2012/052827
(87) Numéro de publication internationale: WO 2013/088030

(56) Documents cités:
- DE-C- 651 314
- US-A- 2 395 113
- US-A- 2 683 963
- US-A- 2 701 441
- US-A- 3 136 121
- US-A- 3 367 271

## Description

### Arrière-plan de l'invention

La présente invention concerne le domaine des dispositifs de pressurisation, et en particulier un dispositif de pressurisation d'un premier réservoir avec un fluide cryogénique contenu dans un deuxième réservoir et introduit dans le premier réservoir à travers un circuit de pressurisation après avoir été réchauffé dans un échangeur de chaleur dudit circuit de pressurisation.

Des dispositifs de pressurisation de ce type sont utilisés en particulier dans le domaine de la propulsion, et plus particulièrement dans des systèmes d'alimentation en ergols de moteurs à réaction, et notamment de moteurs fusées. Ainsi, un tel dispositif de pressurisation est utilisé, par exemple, dans l'Etage Cryogénique Principal (ECP) des lanceurs spatiaux Ariane 5 pour pressuriser le réservoir d'oxygène liquide destiné à l'alimentation du moteur principal Vulcain.

Un tel dispositif est également connu de US 2 395 113, considéré comme art antérieur le plus proche.

Un inconvénient des dispositifs de pressurisation de l'art antérieur, et notamment de celui utilisé dans l'ECP, est que le deuxième réservoir doit être lui-même pressurisé avec un gaz contenu dans d'autres réservoirs sous pression. Ainsi, dans l'ECP, le réservoir d'hélium supercritique du Sous-Système Hélium Liquide (SSHeL) servant à pressuriser le réservoir d'oxygène liquide est lui-même pressurisé avec de l'hélium gazeux provenant d'un réservoir d'hélium gazeux formant une Capacité Haute Pression (CHP). Cette CHP contient de l'hélium supercritique sous près de 400 bar de pression à température ambiante. Les trois quarts de l'hélium contenue dans la CHP sont utilisés pour la pressurisation du réservoir d'hélium supercritique du SSHeL, le reste étant fourni aux Vannes d'Alimentation Hydrogène et Oxygène (VAH et VAO, respectivement), au Système Correcteur POGO (SCP), ainsi qu'aux Boîtiers d'Electrovannes de Balayage Moteur (BEVM) et de Commande Moteur (BEVC). Afin de ramener la pression qui règne dans la CHP à une pression d'utilisation inférieure à 100 bar, cette CHP nécessite aussi une Platine de Gonflage et Détente (PGD). La masse de la CHP, avec celle de la PGD, pénalisent sensiblement la charge utile du lanceur. En outre, la PGD constitue un élément mécanique complexe pouvant affecter négativement la fiabilité du lanceur.

### Objet et résumé de l'invention

L'invention vise à proposer un dispositif de pressurisation d'un premier réservoir, comprenant au moins un deuxième réservoir, adapté à contenir un fluide cryogénique, et un premier circuit de pressurisation pour communiquer ledit deuxième réservoir avec le premier réservoir, dans lequel ledit premier circuit de pressurisation comprend au moins un premier échangeur de chaleur pour réchauffer un débit dudit fluide cryogénique extrait du deuxième réservoir à travers le premier circuit de pressurisation, et qui permette d'assurer la pressurisation du deuxième réservoir sans avoir recours à un réservoir séparé de gaz à haute pression.

Dans au moins un mode de réalisation ce but est atteint grâce au fait que ce dispositif de pressurisation comprend en outre un deuxième circuit de pressurisation, avec un compresseur, dérivé du premier circuit de pressurisation et débouchant sur le deuxième réservoir. Ainsi, le deuxième réservoir peut être pressurisé, sans avoir recours à un réservoir de gaz à haute pression, avec du fluide extrait du même deuxième réservoir, et comprimé avant d'être réinjecté dans le deuxième réservoir.

Le fluide cryogénique peut en particulier être contenu sous forme liquide ou supercritique dans le deuxième réservoir, pour être vaporisé dans le premier échangeur de chaleur.

Suivant un premier mode de réalisation, le deuxième circuit de pressurisation est dérivé du premier circuit de pressurisation en amont dudit premier échangeur de chaleur. On évite ainsi de réintroduire le fluide cryogénique dans le deuxième réservoir à une température trop élevée.

Toutefois, suivant un deuxième mode de réalisation alternatif, le deuxième circuit de pressurisation est dérivé du premier circuit de pressurisation en aval dudit premier échangeur de chaleur. On utilise ainsi l'augmentation d'enthalpie du fluide cryogénique dans ledit premier échangeur de chaleur pour faciliter la pressurisation du deuxième réservoir.

Afin d'actionner ledit compresseur, dans certains modes de réalisation le dispositif de pressurisation peut comporter, en outre, une turbine pour entraîner ledit compresseur. Alternativement, toutefois, le dispositif de pressurisation peut comporter un autre type de moteur, telle que par exemple un moteur électrique, pour entraîner ledit compresseur.

L'invention concerne également un système d'alimentation d'un moteur à réaction en au moins un premier ergol liquide, comportant au moins un premier réservoir, adapté à contenir ledit premier ergol liquide, et un dispositif de pressurisation du premier réservoir, comprenant au moins un deuxième réservoir, adapté à contenir un fluide cryogénique, un premier circuit de pressurisation pour communiquer ledit deuxième réservoir avec le premier réservoir. Ledit premier circuit de pressurisation comprend au moins un premier échangeur de chaleur pour réchauffer un débit dudit fluide cryogénique du deuxième réservoir extrait à travers le premier circuit de pressurisation. Le dispositif de pressurisation comprend aussi, en outre, un deuxième circuit de pressurisation, avec un compresseur, communicant le premier circuit de pressurisation, en amont dudit premier échangeur de chaleur, avec le deuxième réservoir. En particulier, ledit moteur à réaction peut être un moteur fusée. Quand ledit compresseur est entraîné par une turbine, celle-ci pourrait, par exemple, être actionnée par la détente d'un ergol chauffé dans un échangeur de chaleur adossé à une chambre propulsive et/ou une tuyère du moteur à réaction.

Afin d'éviter une réaction chimique avec ledit premier ergol, le fluide cryogénique du deuxième réservoir est inerte, comme par exemple de l'hélium. D'autres fluides inertes, comme par exemple l'azote, peuvent toutefois être envisagés alternativement. Quand le premier fluide cryogénique est inerte, il peut en outre servir non seulement à la pressurisation du premier réservoir, mais aussi, par exemple, au balayage de différents conduits et organes moteurs pour limiter les risques d'explosion.

En particulier, le premier ergol liquide peut être un oxydant et/ou un liquide cryogénique avec un point de condensation plus élevé que le fluide cryogénique du deuxième réservoir. Plus particulièrement, ce premier ergol liquide peut être de l'oxygène liquide.

En outre, dans certains modes de réalisation, ce système d'alimentation peut comporter aussi au moins une turbopompe pour le pompage au moins dudit premier ergol liquide, et un générateur de gaz chauds pour l'entraînement de l'au moins une turbopompe, ledit échangeur de chaleur étant configuré pour réchauffer ledit débit de fluide cryogénique extrait du deuxième réservoir avec une chaleur générée par ledit générateur de gaz chauds, et en particulier une chaleur extraite desdits gaz chauds, par exemple en aval de la turbopompe. Il est ainsi possible d'exploiter au moins en partie cette chaleur restante, qui serait autrement perdue, pour réchauffer le débit de fluide cryogénique extrait du deuxième réservoir.

L'invention concerne également un procédé de pressurisation d'un premier réservoir, dans lequel un débit de fluide cryogénique est extrait d'un deuxième réservoir à travers un premier circuit de pressurisation, et réchauffé dans au moins un premier échangeur de chaleur, une première partie de ce débit réchauffé étant ensuite introduite dans le premier réservoir pour le pressuriser. Dans au moins un mode de réalisation de l'invention, une deuxième partie de ce débit réchauffé est dérivée du premier circuit de pressurisation à travers un deuxième circuit de pressurisation, comprimée en amont de l'échangeur par un compresseur dudit deuxième circuit de pressurisation, et introduite dans le deuxième réservoir pour pressuriser le deuxième réservoir.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une illustration schématique d'un système d'alimentation en ergols liquides d'un moteur à réaction de l'art antérieur ; et
- la figure 2 est une illustration schématique d'un système d'alimentation en ergols liquides d'un moteur à réaction suivant un premier mode de réalisation de la présente invention ;
- la figure 3 est une illustration schématique d'un système d'alimentation en ergols liquides d'un moteur à réaction suivant un deuxième mode de réalisation de la présente invention ;
- la figure 4 est une illustration schématique d'un détail d'une variante des premier ou deuxième modes de réalisation.

### Description détaillée de l'invention

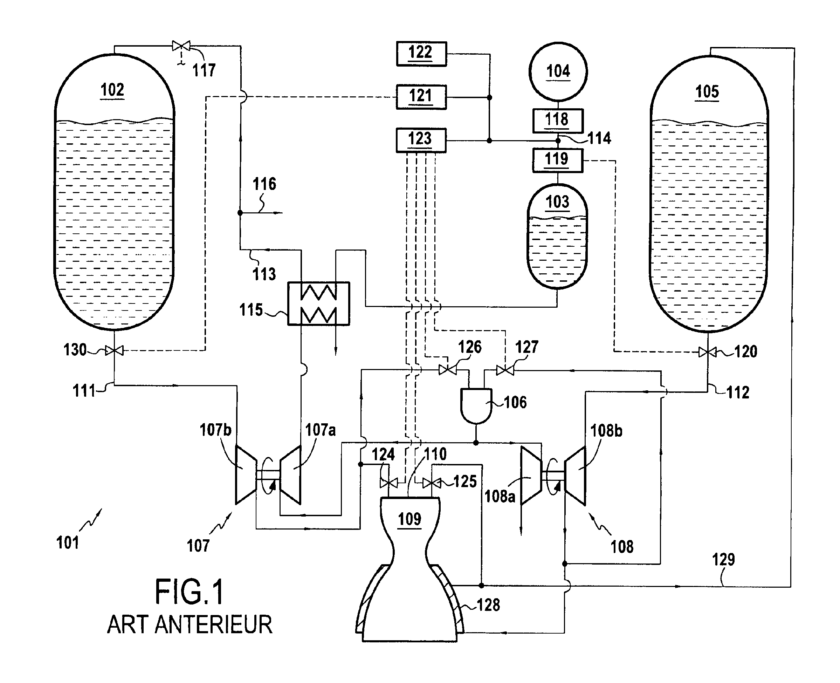

La figure 1 illustre de manière schématique un système 101 d'alimentation en ergols d'un moteur à réaction de l'art antérieur, et plus spécifiquement d'un moteur principal de type Vulcain propulsant un ECP de lanceur type Ariane 5.

Ce système d'alimentation 101 comporte un premier réservoir 102, contenant l'oxygène - ou plus généralement un ergol oxydant - sous forme liquide en tant que premier ergol, un deuxième réservoir 103, contenant de l'hélium supercritique, notamment pour la pressurisation du premier réservoir, un troisième réservoir 104, contenant de l'hélium gazeux à haute pression, notamment pour la pressurisation du deuxième réservoir, et un quatrième réservoir 105, contenant l'hydrogène - ou plus généralement un ergol réducteur - sous forme liquide en tant que deuxième ergol. Le système d'alimentation 101 comporte aussi un circuit 111 d'alimentation de la chambre propulsive 109 en oxygène, et un circuit 112 d'alimentation de la chambre propulsive 109 en hydrogène, ainsi qu'un générateur de gaz 106, relié aussi aux sorties pompes 107b, 108b pour son alimentation en hydrogène et oxygène.

Le circuit d'alimentation en ergol oxydant 111 comprend une première turbopompe 107, connectée au générateur de gaz 106 pour recevoir des gaz chauds pour l'actionnement de la turbine 107a, laquelle entraîne la pompe 107b pour l'alimentation de la chambre propulsive 109 en oxygène. Le circuit d'alimentation en ergol réducteur 112 comprend une deuxième turbopompe 108, connectée au générateur de gaz 106 pour recevoir aussi des gaz chauds du générateur de gaz 106 pour l'actionnement de la turbine 108a, laquelle entraîne la pompe 108b pour l'alimentation de la chambre propulsive 109 en ergol réducteur.

Le système d'alimentation 101 comporte aussi un premier circuit de pressurisation 113, reliant le deuxième réservoir 103 au premier réservoir 102 pour la pressurisation du premier réservoir 102, et un deuxième circuit de pressurisation 114, reliant le troisième réservoir 104 au deuxième réservoir 103 pour la pressurisation du deuxième réservoir 103. Le premier circuit de pressurisation 113 comprend un premier échangeur de chaleur 115 pour réchauffer et vaporiser l'hélium supercritique extrait du deuxième réservoir 103 avec les calories provenant de gaz chauds en aval de la turbine 107a de la première turbopompe 107.

Un circuit de piquage moteur 116 est dérivé du premier circuit de pressurisation 113 en aval de ce premier échangeur de chaleur 115. Ce circuit de piquage moteur 116 permet d'alimenter en hélium gazeux un ensemble de sous-systèmes annexes qui requièrent de l'hélium gazeux tels que des balayages à l'hélium.

Le deuxième circuit de pressurisation 114 comporte une Platine de Gonflage et Détente (PGD) 118 pour piloter le passage d'hélium gazeux dans les deux sens. Ce deuxième circuit de pressurisation 114 est connecté au deuxième réservoir 103 à travers un Boîtier Electrovannes Hydrogène (BEVH) 119 servant aussi à la commande d'une Vanne d'Alimentation Hydrogène (VAH) 120 pour le pilotage du circuit d'alimentation en hydrogène 112. En outre, entre la PGD 118 et le BEVH 119, le deuxième circuit de pressurisation 114 présente des dérivations pour alimenter différents boitiers d'électrovannes. Le BEVO 121 sert à la commande d'une Vanne d'Alimentation Oxygène (VAO) 130 pour le pilotage du circuit d'alimentation en oxygène 111. Le BEVM 122 sert à la commande de vannes de purge et de balayage. Finalement, le BEVC 123 sert à la commande d'une Vanne Chambre Oxygène (VCO) 124 pilotant l'arrivée d'oxygène dans la chambre propulsive 109, d'une Vanne Chambre Hydrogène (VCH) 125 pilotant l'arrivée d'hydrogène dans la chambre propulsive 109, d'une Vanne Générateur Oxygène (VGO) 126 pilotant l'arrivée d'oxygène dans le générateur de gaz 106 et d'une Vanne Générateur Hydrogène (VGH) 127 pilotant l'arrivée d'hydrogène dans le générateur de gaz 106.

Le système d'alimentation 101 comporte aussi, dans le circuit d'alimentation en hydrogène 112, entre la deuxième turbopompe 108 et la plaque d'injection 110 de la chambre propulsive 109, un deuxième échangeur de chaleur 128, dit régénératif, servant à refroidir les parois de la chambre propulsive 109. En outre, dans ce système d'alimentation 101, un troisième circuit de pressurisation 129 relie ce circuit d'alimentation 112, en aval du deuxième échangeur de chaleur 121, au quatrième réservoir 105, afin de le pressuriser avec de l'hydrogène vaporisé dans le deuxième échangeur de chaleur 121 avant d'être dérivé du circuit d'alimentation en hydrogène 112.

Dans ce système d'alimentation 101 de l'art antérieur, l'utilisation d'hélium pressurisé à haute pression (proche de 400 bar) dans le troisième réservoir 104 formant une Capacité Haute Pression (CHP) proche de 400 l pour la pressurisation du deuxième réservoir 103 implique une pénalité importante en termes de sa masse totale, ce qui diminue la charge utile du lanceur. Ainsi, ce troisième réservoir 104 présente une masse de près de 100 kg, auxquels vient s'ajouter une masse supplémentaire associée à la PGD 118, nécessaire pour détendre la pression de l'hélium gazeux stocké dans le réservoir 104, à une pression d'utilisation inférieure à 100 bar.

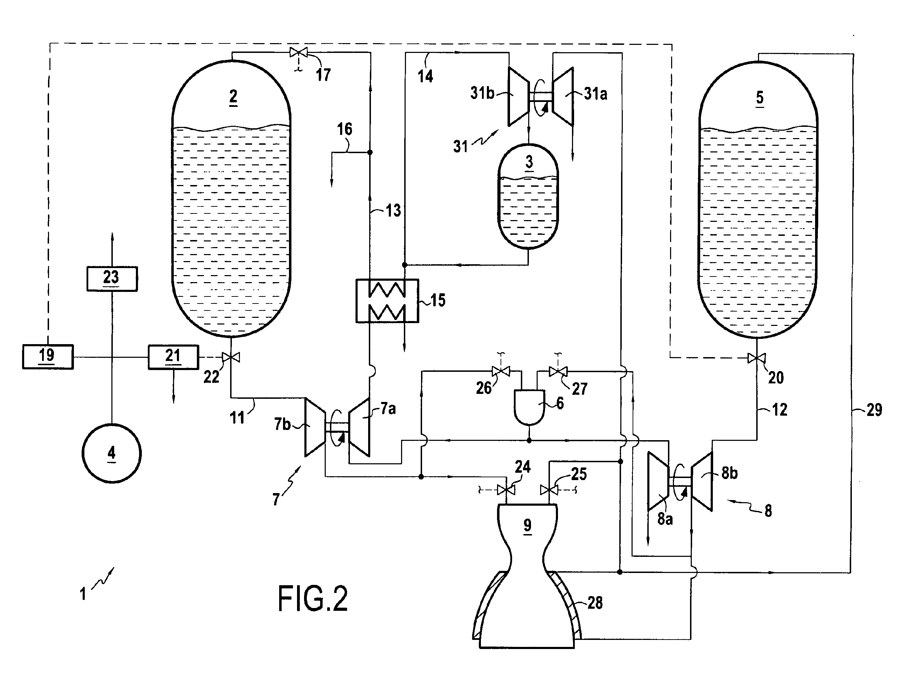

La figure 2 illustre un système d'alimentation 1, suivant un premier mode de réalisation de la présente invention, qui offre une masse réduite et une moindre complexité par rapport à cet art antérieur. Ce système d'alimentation 1 comporte un premier réservoir 2, contenant de l'oxygène liquide en tant que premier ergol, un deuxième réservoir 3, contenant de l'hélium supercritique, notamment pour la pressurisation du premier réservoir, un troisième réservoir 4, contenant de l'hélium gazeux, et un quatrième réservoir 5, contenant de l'hydrogène liquide en tant que deuxième ergol. Le système d'alimentation 1 comporte aussi un circuit 11 d'alimentation de la chambre propulsive 9 en oxygène, et un circuit 12 d'alimentation de la chambre propulsive 9 en hydrogène, ainsi qu' un générateur de gaz 6, relié aussi aux sorties pompes 107b, 108b pour son alimentation en hydrogène et oxygène.

Le circuit d'alimentation en oxygène 11 comprend une première turbopompe 7, connectée au générateur de gaz 6 pour recevoir des gaz chauds pour l'actionnement de la turbine 7a, laquelle entraîne la pompe 7b pour l'alimentation de la chambre propulsive 9 en oxygène. Le circuit d'alimentation en hydrogène 12 comprend une deuxième turbopompe 8, connectée au générateur de gaz 6 pour recevoir aussi des gaz chauds du générateur de gaz 6 pour l'actionnement de la turbine 8a, laquelle entraîne la pompe 8b pour l'alimentation de la chambre propulsive 109 en hydrogène.

Le système d'alimentation 1 comporte aussi un premier circuit de pressurisation 13, reliant le deuxième réservoir 3 au premier réservoir 2 pour la pressurisation du premier réservoir 2. Ce premier circuit de pressurisation 13 comprend un premier échangeur de chaleur 15 pour réchauffer et vaporiser l'hélium supercritique extrait du deuxième réservoir 3 avec les calories provenant de gaz chauds en aval de la turbine 7a de la première turbopompe 7. Un deuxième circuit de pressurisation 14, dérivé du premier circuit d'alimentation 13 en amont du premier échangeur de chaleur 15, retourne vers le deuxième réservoir 3, et sert à sa pressurisation. Pour cela, ce deuxième circuit de pressurisation 14 comprend un turbocompresseur 31, dont le compresseur 31b sert à comprimer le débit d'hélium supercritique dérivé du premier circuit de pressurisation 13 pour sa réinjection à une plus grande pression et température dans le deuxième réservoir 3. Un circuit de piquage moteur 16 est dérivé du premier circuit de pressurisation 13 en aval du premier échangeur de chaleur 15. Ce circuit de piquage moteur 16 permet d'alimenter en hélium gazeux un ensemble de sous-systèmes annexes qui requièrent de l'hélium gazeux tels que des balayages à l'hélium.

Le système d'alimentation 1 comporte aussi, dans le circuit d'alimentation en hydrogène 12, entre la deuxième turbopompe 8 et la plaque d'injection 10 de la chambre propulsive 9, un deuxième échangeur de chaleur 28, dit régénératif, servant à refroidir les parois de la chambre propulsive 9. En outre, dans ce système d'alimentation 1, un troisième circuit de pressurisation 29 relie ce circuit d'alimentation 12, en aval du deuxième échangeur de chaleur 28, au quatrième réservoir 5, afin de le pressuriser avec de l'hydrogène vaporisé dans le deuxième échangeur de chaleur 21 avant d'être dérivé du circuit d'alimentation en hydrogène 12. Le circuit d'alimentation en hydrogène 29 traverse la turbine 31a du turbocompresseur 31 en aval du deuxième échangeur de chaleur 28, de telle manière qu'une détente partielle de l'hydrogène vaporisé dans le deuxième échangeur de chaleur 28 actionne cette turbine 31a pour entraîner le compresseur 31b auquel elle est couplé.

En outre, le troisième réservoir 4 est connecté à un Boîtier Electrovannes Hydrogène (BEVH) 19, à un Boîtier Electrovannes Oxygène (BEVO) 21, et à un Boîtier Electrovannes Balayage Moteur (BEVM) 22 de manière à les alimenter en hélium gazeux à pression. Comme dans l'art antérieur, le BEVH 19 sert à la commande d'une Vanne d'Alimentation Hydrogène (VAH) 20 pour le pilotage du circuit d'alimentation en hydrogène 12, et le BEVO 21 sert à la commande d'une Vanne d'Alimentation Oxygène (VAO) 22 pour le pilotage du circuit d'alimentation en oxygène 11. Le BEVM 22 sert à la commande de vannes de purge et de balayage. Finalement, la Vanne Chambre Oxygène (VCO) 24 pilotant l'arrivée d'oxygène dans la chambre propulsive 9, la Vanne Chambre Hydrogène (VCH) 25 pilotant l'arrivée d'hydrogène dans la chambre propulsive 9, la Vanne Générateur Oxygène (VGO) 26 pilotant l'arrivée d'oxygène dans le générateur de gaz 6 et la Vanne Générateur Hydrogène (VGH) 27 pilotant l'arrivée d'hydrogène dans le générateur de gaz 6 sont toutes à commande électrique directe, ce qui permet l'élimination du Boîtier Electrovannes de Commande de l'art antérieur, réduisant encore plus la servitude en hélium pressurisé et donc le volume nécessaire pour le troisième réservoir 4.

Dans un exemple particulier de ce mode de réalisation de l'invention, il est ainsi possible d'utiliser un turbocompresseur 31 de taille et donc de masse limitées, pour remplacer la CHP formée, dans le système d'alimentation de l'art antérieur, par un réservoir 104 d'hélium gazeux sous haute pression à température ambiante, et nécessitant une PGD 118 requise dans l'art antérieur pour détendre l'hélium gazeux à une pression d'utilisation acceptable. Par exemple, le réservoir 104 de l'exemple comparatif illustré sur la figure 1, avec une capacité proche de 400 l à près de 400 bar de pression, et une masse de près de 100 kg, pourrait être remplacé, avec la PGD 118, par un turbocompresseur 31 de masse inférieure à 20 kg.

Dans cet exemple de réalisation particulier, le turbocompresseur 31 est actionné par la détente d'un faible débit d'hydrogène gazeux arrivant à la turbine 31a, ce débit d'hydrogène étant lui-même issu de l'échangeur de chaleur 28, dit régénératif, servant à refroidir les parois de la chambre propulsive 9. Le compresseur 31b comprime un faible débit d'hélium supercritique, inférieur à 50 g/s, provenant du deuxième réservoir 3 et dérivé du premier circuit de pressurisation 13 à travers le deuxième circuit de pressurisation 14. A la sortie du compresseur 31b, ce débit d'hélium supercritique atteint un état thermodynamique suffisant, avec une pression supérieure à 30 bar et une température supérieure à 20 K, pour permettre la pressurisation du deuxième réservoir 3 et pour y maintenir cette pression malgré l'extraction d'un plus grand débit massique d'hélium supercritique du deuxième réservoir 3 pour la pressurisation du premier réservoir 2 et le piquage moteur.

Dans cet exemple de réalisation particulier, il suffit d'un troisième réservoir 4 contenant une quantité moindre d'hélium (par exemple une capacité inférieure à 100 l) gazeux à pression réduite (par exemple une pression inférieure à 100 bar), et à une température ambiante pour alimenter le Boîtier Electrovannes Oxygène (BEVO) 21, et à un Boîtier Electrovannes Balayage Moteur (BEVM) 22. La masse de ce troisième réservoir 4, formant une Capacité Basse Pression (CBP), est donc très inférieure à celle de la Capacité Haute Pression (CHP) qui prévalait dans l'art antérieur. La suppression du BEVH et du BEVC participe également à une réduction de masse globale de l'ordre de 100 kg dans cet exemple de réalisation particulier par rapport à l'exemple comparatif illustré sur la figure 1.

Dans une variante de ce premier mode de réalisation, afin d'optimiser la pressurisation du deuxième réservoir 3, le deuxième circuit de pressurisation 14 peut traverser un échangeur de chaleur en aval du compresseur 31b afin d'encore accroître la température du fluide cryogénique avant de le réinjecter dans le deuxième réservoir 3.

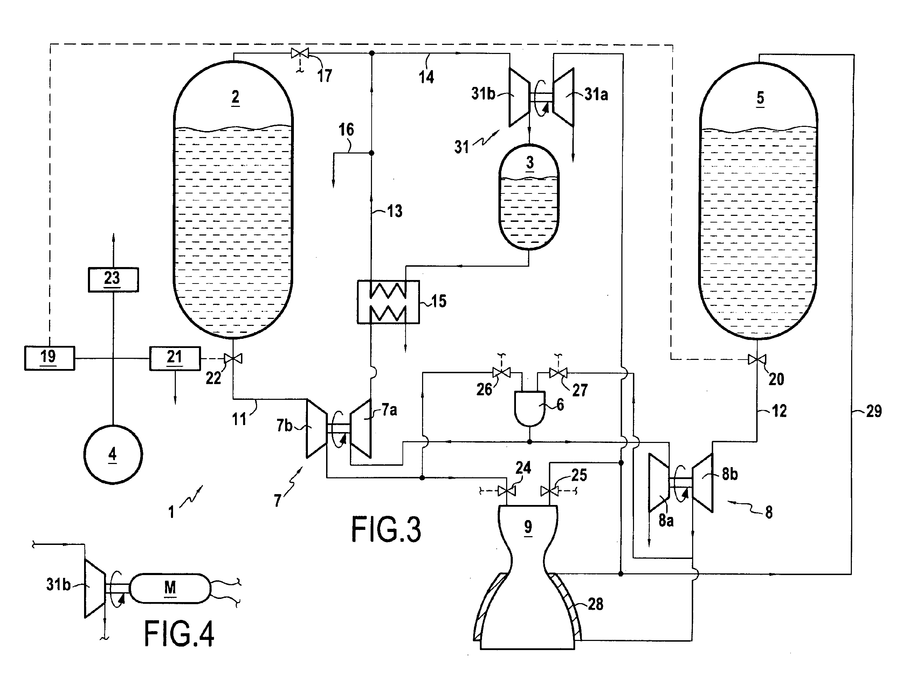

Dans un deuxième mode de réalisation, illustré sur la figure 3, dans laquelle chaque élément reçoit le même chiffre de référence qu'un élément équivalent dans la figure 2, le deuxième circuit de pressurisation 14 est dérivé du premier circuit de pressurisation 13 en aval du premier échangeur de chaleur 15, de telle manière que le débit d'hélium à réinjecter dans le deuxième réservoir 3 est préchauffé dans le premier échangeur de chaleur 15 avant d'être dérivé vers le deuxième circuit de pressurisation 14 et comprimé par le compresseur 31b. Le reste des éléments de ce système d'alimentation 1 suivant le deuxième mode de réalisation sont arrangés de manière équivalente au premier mode de réalisation.

Bien que dans les deux modes de réalisation illustrés sur les figures 2 et 3 le compresseur 31b soit couplé à une turbine 31a avec laquelle il forme un turbocompresseur 31, dans une variante illustrée sur la figure 4 et applicable aux deux modes de réalisation, le compresseur 31b est plutôt actionné par un moteur électrique M. On obtient ainsi une plus grande flexibilité dans le pilotage de ce compresseur 31b.

Quoique la présente invention ait été décrite en se référant à des modes de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Dispositif de pressurisation d'un premier réservoir (2), comprenant au moins :
un deuxième réservoir (3), adapté à contenir un fluide cryogénique, et
un premier circuit de pressurisation (13) pour communiquer ledit deuxième réservoir (3) avec le premier réservoir (2), ledit premier circuit de pressurisation (13) comprenant au moins un premier échangeur de chaleur (15) pour réchauffer un débit dudit fluide cryogénique extrait du deuxième réservoir (3) à travers le premier circuit de pressurisation (13),
le dispositif de pressurisation étant **caractérisé en ce qu'**il comprend en outre un deuxième circuit de pressurisation (14), avec un compresseur (31b), dérivé du premier circuit de pressurisation (13) et débouchant sur le deuxième réservoir (3).

2. Dispositif de pressurisation suivant la revendication 1, dans lequel le deuxième circuit de pressurisation (14) est dérivé du premier circuit de pressurisation (13) en amont dudit premier échangeur de chaleur (15).

3. Dispositif de pressurisation suivant la revendication 1, dans lequel le deuxième circuit de pressurisation (14) est dérivé du premier circuit de pressurisation (13) en aval dudit premier échangeur de chaleur (15).

4. Dispositif de pressurisation suivant l'une quelconque des revendications 1 à 3, comprenant en outre une turbine (31a) pour entraîner ledit compresseur (31b).

5. Dispositif de pressurisation suivant l'une quelconque des revendications 1 à 3, comprenant en outre un moteur électrique (M) pour entraîner ledit compresseur (31b).

6. Système d'alimentation (1) d'un moteur à réaction en au moins un premier ergol liquide, comportant au moins :
un premier réservoir (2), adapté à contenir ledit premier ergol liquide, et
un dispositif de pressurisation du premier réservoir, suivant l'une quelconque des revendications précédentes.

7. Système d'alimentation (1) suivant la revendication 6, dans lequel le fluide cryogénique du deuxième réservoir (3) est inerte.

8. Système d'alimentation (1) suivant la revendication 7, dans lequel le fluide cryogénique du deuxième réservoir (3) est de l'hélium.

9. Système d'alimentation (1) suivant la revendication 7, dans lequel le fluide cryogénique du deuxième réservoir (3) est de l'azote.

10. Système d'alimentation (1) suivant l'une quelconque des revendications 6 à 9, dans lequel ledit premier ergol liquide est un oxydant.

11. Système d'alimentation (1) suivant l'une quelconque des revendications 6 à 10, dans lequel ledit premier ergol liquide est un liquide cryogénique avec un point de condensation plus élevé que le fluide cryogénique du deuxième réservoir (3).

12. Système d'alimentation suivant l'une quelconque des revendications 6 à 11, comprenant en outre au moins une turbopompe (7) pour le pompage au moins dudit premier ergol liquide, et un générateur de gaz chauds (6) pour l'entraînement d'au moins une turbopompe (7), ledit premier échangeur de chaleur (15) étant configuré pour réchauffer ledit débit de fluide cryogénique extrait du deuxième réservoir (3) avec une chaleur générée par ledit générateur de gaz chauds (6).

13. Procédé de pressurisation d'un premier réservoir (2), dans lequel un débit de fluide cryogénique est extrait d'un deuxième réservoir (3) à travers un premier circuit de pressurisation (13), et réchauffé dans au moins un premier échangeur de chaleur (15), ce débit réchauffé étant ensuite introduite dans le premier réservoir (2) pour le pressuriser, et **caractérisé en ce qu'**une deuxième partie de ce débit extrait du réservoir (3) est dérivée du premier circuit de pressurisation (13) à travers un deuxième circuit de pressurisation (14), comprimée par un compresseur (31b) dudit deuxième circuit de pressurisation (14), et introduite dans le deuxième réservoir (3) pour pressuriser le deuxième réservoir (3).

## Patentansprüche

1. Vorrichtung zur Druckbeaufschlagung eines ersten Behälters (2), umfassend mindestens:
einen zweiten Behälter (3), der dazu vorgesehen ist, ein kryogenes Fluid zu enthalten, und
einen ersten Druckbeaufschlagungskreis (13), um den zweiten Behälter (3) mit dem ersten Behälter (2) in Verbindung zu bringen, wobei der erste Druckbeaufschlagungskreis (13) mindestens einen ersten Wärmetauscher (15) zur Erwärmung eines Durchflusses des kryogenen Fluids, das aus dem zweiten Behälter (3) entnommen wurde, durch den ersten Druckbeaufschlagungskreis (13) enthält,
wobei die Druckbeaufschlagungsvorrichtung **dadurch gekennzeichnet ist, dass** sie ferner einen zweiten Druckbeaufschlagungskreis (14) mit einem Kompressor (31 b) umfasst, die von dem ersten Druckbeaufschlagungskreis (13) abgezweigt ist und in den zweiten Behälter (3) mündet.

2. Vorrichtung zur Druckbeaufschlagung nach Anspruch 1, bei der der zweite Druckbeaufschlagungskreis (14) von dem ersten Druckbeaufschlagungskreis (13) stromaufwärts zu dem ersten Wärmetauscher (15) abgezweigt ist.

3. Vorrichtung zur Druckbeaufschlagung nach Anspruch 1, bei der der zweite Druckbeaufschlagungskreis (14) von dem ersten Druckbeaufschlagungskreis (13) stromabwärts zu dem ersten Wärmetauscher (15) abgezweigt ist.

4. Vorrichtung zur Druckbeaufschlagung nach einem der Ansprüche 1 bis 3, ferner umfassend eine Turbine (31 a) für den Antrieb des Kompressors (31 b).

5. Vorrichtung zur Druckbeaufschlagung nach einem der Ansprüche 1 bis 3, ferner umfassend einen Elektromotor (M) für den Antrieb des Kompressors (31 b).

6. Versorgungssystem (1) eines Reaktionsmotors mit mindestens einem ersten flüssigen Treibstoff, mindestens umfassend:
einen ersten Behälter (2), der dazu vorgesehen ist, den ersten flüssigen Treibstoff zu enthalten,
eine Vorrichtung zur Druckbeaufschlagung des ersten Behälters nach einem der vorhergehenden Ansprüche.

7. Versorgungssystem (1) nach Anspruch 6, bei dem das kryogene Fluid des zweiten Behälters (3) inert ist.

8. Versorgungssystem (1) nach Anspruch 7, bei dem das kryogene Fluid des zweiten Behälters (3) Helium ist.

9. Versorgungssystem (1) nach Anspruch 7, bei dem das kryogene Fluid des zweiten Behälters (3) Stickstoff ist.

10. Versorgungssystem (1) nach einem der Ansprüche 6 bis 9, bei dem der erste flüssige Treibstoff ein Oxidationsmittel ist.

11. Versorgungssystem (1) nach einem der Ansprüche 6 bis 10, bei dem der erste flüssige Treibstoff eine kryogene Flüssigkeit mit einem höheren Kondensationspunkt als das kryogene Fluid des zweiten Behälters (3) ist.

12. Versorgungssystem nach einem der Ansprüche 6 bis 11, ferner umfassend mindestens eine Turbopumpe (7) zum Pumpen mindestens des ersten flüssigen Treibstoffs und einen Heißgasgenerator (6) für den Antrieb mindestens einer Turbopumpe (7), wobei der erste Wärmetauscher (15) derart ausgeführt ist, dass er die aus dem zweiten Behälter (3) entnommene kryogene Fluidmenge mit einer Wärme, die vom Heißgasgenerator (6) erzeugt wird, erwärmt.

13. Verfahren zur Druckbeaufschlagung eines ersten Behälters (2), bei dem ein kryogener Durchfluss aus einem zweiten Behälter (3) durch einen ersten Druckbeaufschlagungskreis (13) entnommen und in mindestens einem ersten Wärmetauscher (15) erwärmt wird, wobei dieser erwärmte Durchfluss sodann in den ersten Behälter (2) eingeleitet wird, um ihn mit Druck zu beaufschlagen, und **dadurch gekennzeichnet, dass** ein zweiter Teil dieses aus dem Behälter (3) entnommenen Durchflusses von dem ersten Druckbeaufschlagungskreis (13) über einen zweiten Druckbeaufschlagungskreis (14) abgezweigt wird, von einem Kompressor (31 b) des zweiten Druckbeaufschlagungskreises (14) komprimiert und in den zweiten Behälter (3) eingeleitet wird, um den zweiten Behälter (3) mit Druck zu beaufschlagen.

## Claims

1. A pressurizing device for pressurizing a first tank (2), the device comprising at least:
a second tank (3) adapted to contain a cryogenic fluid; and
a first pressurizing circuit (13) for putting said second tank (3) into communication with the first tank (2), said first pressurizing circuit (13) including at least a first heat exchanger (15) for heating a flow of said cryogenic fluid extracted from the second tank (3) through the first pressurizing circuit (13),
the pressurizing device being **characterized in that** it further comprises a second pressurizing circuit (14) with a compressor (31b), branched off from the first pressurizing circuit (13) and leading to the second tank (3) .

2. A pressurizing device according to claim 1, wherein the second pressurizing circuit (14) is branched off from the first pressurizing circuit (13) upstream from said first heat exchanger (15).

3. A pressurizing device according to claim 1, wherein the second pressurizing circuit (14) is branched off from the first pressurizing circuit (13) downstream from said first heat exchanger (15).

4. A pressurizing device according to any one of claims 1 to 3, further including a turbine (31a) for driving said compressor (31b).

5. A pressurizing device according to any one of claims 1 to 3, further including an electric motor (M) for driving said compressor (31b).

6. A feed system (1) for feeding a reaction engine with at least a first liquid propellant, the system comprising at least:
a first tank (2) adapted to contain said first liquid propellant; and
a pressurizing device for pressurizing the first tank, the device being according to any preceding claim.

7. A feed system (1) according to claim 6, wherein the cryogenic fluid of the second tank (3) is inert.

8. A feed system (1) according to claim 7, wherein the cryogenic fluid of the second tank (3) is helium.

9. A feed system (1) according to claim 7, wherein the cryogenic fluid of the second tank (3) is nitrogen.

10. A feed system (1) according to any one of claims 6 to 9, wherein said first liquid propellant is an oxidizer.

11. A feed system (1) according to any one of claims 6 to 10, wherein said first liquid propellant is a cryogenic liquid with a condensation point higher than that of the cryogenic fluid of the second tank (3).

12. A feed system according to any one of claims 6 to 11, further including at least one turbopump (7) for pumping at least said first liquid propellant, and a hot gas generator (6) for driving at least one turbopump (7), said first heat exchanger (15) being configured to heat said flow of cryogenic fluid extracted from the second tank (3) using heat generated by said hot gas generator (6).

13. A method of pressurizing a first tank (2), wherein a flow of cryogenic fluid is extracted from a second tank (3) through a first pressurizing circuit (13), and is heated in at least a first heat exchanger (15), this heated flow then being introduced into the second tank (2) in order to pressurize it, the method being **characterized in that** a second portion of this flow extracted from the second tank (3) is taken from the first pressurizing circuit (13) via a second pressurizing circuit (14), is compressed by a compressor (31b) of said second pressurizing circuit (14), and is introduced into the second tank (3) in order to pressurize the second tank (3).
